# EUROPÄISCHE PATENTANMELDUNG

(11) **EP 1 754 905 A2**
(43) Veröffentlichungstag der Anmeldung: **21.02.2007**
(21) Anmeldenummer: 06016074.4
(22) Anmeldetag: 02.08.2006
(51) Int. Cl.: F16D 25/0638, F16D 25/12

(54) **Kopplungsvorrichtung**

(30) Priorität: 19.08.2005 DE 102005039272
(71) Anmelder: ZF FRIEDRICHSHAFEN AG, 88046 Friedrichshafen (DE)
(72) Erfinder: Schröder, Arthur, 97456 Dittelbrunn (DE); Sudau, Jörg, 97464 Niederwerrn (DE); Lotze, Rüdiger, 97424 Schweinfurt (DE)

(57) **Zusammenfassung**

Eine Kopplungsvorrichtung weist ein mit einem Antrieb verbundenes Gehäuse (5), einen Abtrieb, der gegenüber dem Gehäuse in Umfangsrichtung relativ drehbar angeordnet ist, und zumindest eine in dem Gehäuse aufgenommene, zwischen einer Einrückposition und einer Ausrückposition schaltbare Reibungskupplung (98) auf, die als Kupplungsorgane wenigstens ein Anpressmittel (80) und mindestens ein durch das Anpressmittel beaufschlagbares Kupplungselement (22) aufweist. Dem Anpressmittel ist eine dasselbe in vom Kupplungselement fortweisender Richtung beaufschlagende Momenten-Aufbauanordnung (56) zugeordnet, welche einerseits in dem Anpressmittel ein erstes Stützelement (100) und andererseits im Kupplungselement (102) ein zweites Stützelement vorfindet. An zumindest einem der beiden Stützelemente und/oder an der Momenten-Aufbauanordnung ist wenigstens ein Strömungsdurchlass (104,106,108) für Fluid vorgesehen, das in einem die Reibungskupplung aufnehmenden Kühlraum (28) innerhalb des Gehäuses (5) enthalten ist.

## Beschreibung

Die vorliegende Erfindung betrifft eine Kopplungsvorrichtung, aufweisend ein mit einem Antrieb verbundenes Gehäuse, einen Abtrieb, der gegenüber dem Gehäuse in Umfangsrichtung relativ drehbar angeordnet ist, und zumindest eine in dem Gehäuse aufgenommene, zwischen einer Einrückposition und einer Ausrückposition schaltbare Reibungskupplung, die als Kupplungsorgane wenigstens über ein Anpressmittel und über mindestens ein durch das Anpressmittel beaufschlagbares Kupplungselement verfügt, das ebenso wie das Anpressmittel in Achsrichtung begrenzt verlagerbar ist und wenigstens eine Reibfläche und eine mit dem Abtrieb in Wirkverbindung stehende Kupplungsnabe aufweist, wobei beginnend in einem zwischen Einrückposition und Ausrückposition liegenden Berührabschnitt bis zum Erreichen der Einrückposition ein Drehmoment des Antriebs über das Gehäuse und die Reibungskupplung auf den Abtrieb übertragbar ist, während jenseits des Berührabschnittes bis zur Ausrückposition diese Drehmomentübertragung aufgehoben ist.

Eine derartige Kopplungsvorrichtung ist aus der DE 102 34 822 A1 bekannt. Bei einer in dieser Druckschrift gezeigten Ausführungsform ist das Anpressmittel durch einen Kolben gebildet, der auf eine Reibungskupplung, gebildet durch eine Mehrzahl von Kupplungselementen in Form von Lamellen, einwirkt. Die Kupplungselemente sind zur Kühlung in einem Kühlraum angeordnet, der über einen Zufluß und einen Abfluß mit einer externen Fluiddruckquelle in Verbindung steht, und durch den Kolben von einem sowohl bezüglich seines Volumens als auch bezüglich seiner radialen Erstreckung erheblich kleineren Druckraum getrennt ist, wobei der letztgenannte über eine Steuerleitung, die in dem als Getriebeeingangswelle ausgebildeten Abtrieb vorgesehen ist, mit Druck beaufschlagt werden kann. Bei einem Überdruck im Druckraum gegenüber dem Kühlraum wird der Kolben in Richtung des letztgenannten bewegt und damit die Reibungskupplung eingerückt, während nach einer Druckreduzierung im Druckraum über die Steuerleitung unter das Druckniveau des Kühlraumes der Kolben in Gegenrichtung und damit die Reibungskupplung ausgerückt wird.

Bei derartigen Kopplungsvorrichtungen besteht zwischen dem Berührabschnitt und der Einrückposition das Problem, dass der unelastische Kolben mit ebenfalls unelastischen Reibflächen der Reibungskupplung in Wirkverbindung gelangt, und demnach ein sehr kurzer Einrückweg für den Aufbau der Momentenübertragung, Modulation genannt, zur Verfügung steht. Hierdurch gestaltet sich das Einrücken relativ hart und stoßbehaftet. Außerdem wirken sich radiale und/oder axiale Toleranzen zwischen den Kupplungselementen ebenso wie eine eventuelle Welligkeit der Reibflächen in Umfangsrichtung nachteilig auf den Nutzungsgrad der jeweils vorhandenen Reibflächen für die Momentenübertragung aus, was sich in partiell erhöhten Flächenpressungen äußert.

Der Erfindung liegt die Aufgabe zugrunde, eine Kopplungsvorrichtung derart auszubilden, dass unter Vermeidung thermischer Probleme an Kupplungsorganen der Reibungskupplung nachteilige Einflüsse von Toleranzen und Welligkeiten ausgeschlossen sind, und zudem das Einrücken weich und gleichförmig erfolgt.

Bei Zuordnung einer Momenten-Aufbauanordnung zu dem Anpressmittel kann das Modulieren, also das Steuern und/oder Regeln des Einrückvorganges und damit der Aufbau der Momentenübertragung zwischen dem Berührabschnitt und der Einrückposition besonders gleichförmig und weich erfolgen, insbesondere bei Ausbildung der Momenten-Aufbauanordnung mit einem als Anlegefeder dienenden Axialkraftspeicher, wodurch zusätzliche Elastizität zwischen das Anpreßmittel und das zumindest eine Kupplungselement einer Reibungskupplung eingebracht wird. Hierdurch wird für ein besseres Anschmiegen der einzelnen Kontaktflächen der Kupplungsorgane, wie Anpreßmittel und Kupplungselement oder mehrerer Kupplungselemente zueinander, gesorgt. Dadurch können nicht nur axiale und/oder radiale Toleranzen zwischen den einzelnen Kupplungsorganen besser ausgeglichen werden, sondern auch eine eventuell vorhandene Welligkeit im Bereich von Reibbelägen und oder Reibflächen der Kupplungselemente.

Da die Momenten-Aufbauanordnung das Anpressmittel als erstes Stützelement und das Kupplungselement als zweites Stützelement nutzt, ist nicht auszuschließen, das zum einen zwischen dem Anpressmittel und der Momenten-Aufbauanordnung und zum anderen zwischen der letztgenannten und dem Kupplungselement jeweils ein Bereich entsteht, in welchem die Momenten-Aufbauanordnung eine Dichtwirkung erzeugt und somit ein Durchgang von Fluid, welches in einem die Reibungskupplung aufnehmenden Kühlraum enthalten ist, zumindest erheblich reduziert. Da es sich bei dem Anpressmittel ebenso wie bei dem Kupplungselement jeweils um Kupplungsorgane der Reibungskupplung handelt, und diese insbesondere bei Schlupf zwischen einem Antrieb, wie der Kurbelwelle einer Brennkraftmaschine, und einem Abtrieb, wie einer Getriebeeingangswelle, eine Aufheizung erfahren, muss verhindert werden, dass diese Aufheizung zu einer ungewollten thermischen Belastung von Anpressmittel, Fluid und benachbarter Kupplungsscheibe führt. Aus diesem Grund ist an zumindest einem der Stützelemente - also am Anpressmittel und/oder am Kupplungselement - ein Strömungsdurchlass für Fluid vorgesehen, an den, bedingt durch die Relativdrehbewegung der Kupplungselemente zueinander, Fluid für eine Durchströmung und damit für eine Wärmeabfuhr aus dem betreffenden Stützelement herangeführt wird.

In besonderer Ausgestaltung kann der Strömungsdurchlass in Form von Nutungen im Anpressmittel und/oder im benachbarten Kupplungselement ausgebildet sein, ist ebenso aber auch denkbar in Form einer Ausnehmung umfangsseitig zwischen je zwei mit Versatz zueinander angeordneten Zungen der Momenten-Aufbauanordnung. Die letztgenannte Lösung ist insbesondere von Vorteil, wenn die Momenten-Aufbauanordnung über einen Axialkraftspeicher, gebildet durch eine Tellerfeder, verfügt, welche, ausgehend von einem im wesentlichen ringförmigen Grundkörper, an dessen innerer und/oder äußerer Radialseite die vorgenannten Zungen aufweist.

Bei Ausbildung der Momenten-Aufbauanordnung mit einer Tellerfeder ist die Einbringung des Strömungsdurchlasses in zumindest einem der Stützelemente von besonderem Vorteil, da hierdurch die Tellerfeder an ihren Radialseiten geschlossen und dadurch im Querschnitt dünner als eine Tellerfeder mit Zungen an zumindest einer Radialseite ausgebildet sein kann. Hierdurch wird ein Bauraumvorteil erzielt, und zwar im vergleichsweise engen Axialbereich zwischen dem Anpressmittel und dem benachbarten Kupplungselement.

Im folgenden wird ein Ausführungsbeispiel der Erfindung anhand einer Zeichnung näher erläutert. Es zeigt:
- Fig. 1: die obere Hälfte eines Längsschnittes durch eine Kopplungsvorrichtung mit einer über einen Axialkraftspeicher verfügenden Momenten-Aufbauanordnung zwischen einem Anpressmittel und einem Kupplungselement;
- Fig. 2: eine in Fig. 1 eingekreiste, mit X bezeichnete Einzelheit in vergrößerter Darstellung, mit einem Strömungsdurchlass im Anpressmittel;
- Fig. 3: eine Ansicht des Anpressmittels mit Blickrichtung A in Fig. 2
- Fig. 4: wie Fig. 2, aber mit einem Strömungsdurchlass in dem dem Anpressmittel benachbarten Kupplungselement;
- Fig. 5: eine Ansicht des Kupplungselementes mit Blickrichtung B in Fig. 4
- Fig. 6: wie Fig. 2, aber mit einem Strömungsdurchlass im Axialkraftspeicher der Momenten-Aufbauanordnung;
- Fig. 7: eine Ansicht der Momenten-Aufbauanordnung mit Blickrichtung C in Fig. 6

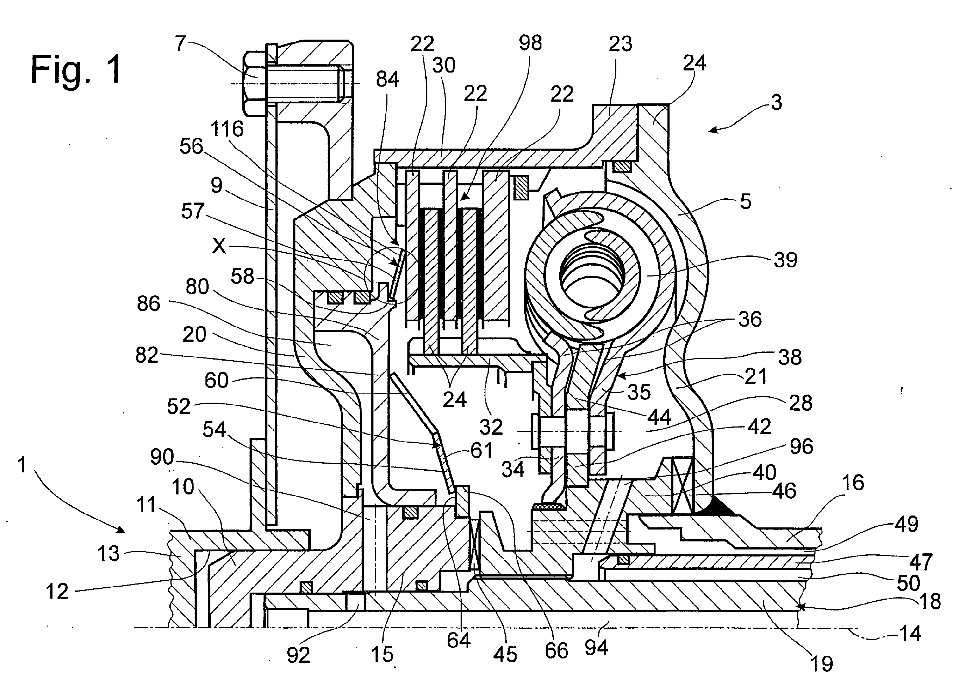

In Fig. 1 ist ein Antriebsstrang 1 mit einer erfindungsgemäßen Kopplungsvorrichtung 3 schematisch dargestellt. Die Kopplungsvorrichtung 3 umfasst ein Gehäuse 5, das über eine Mehrzahl von Befestigungselementen 7 und ein Kopplungselement 9, wie z.B. eine Flexplatte, mit einem Antrieb 11, beispielsweise der Kurbelwelle 13 einer Brennkraftmaschine, zur gemeinsamen Drehung gekoppelt werden kann und im Bereich einer Drehachse 14 einen an einer antriebsseitigen Gehäusenabe 15 vorgesehenen Lagerzapfen 10 aufweist, der in einer am Antrieb 11 ausgebildeten Zentrierführung 12 aufgenommen ist. An der vom Antrieb 11 entfernt liegenden Axialseite weist das Gehäuse 5 eine abtriebsseitige Gehäusenabe 16 auf, die beispielsweise mit einer nicht gezeigten Getriebeanordnung verbunden ist und dort eine ebenfalls nicht gezeigte Fluidförderpumpe zur Drehung antreibt. Zur abtriebsseitigen Gehäusenabe 16 konzentrisch angeordnet ist ein Abtrieb 18, der mit seinem freien Ende aus dem Gehäuse 5 ragt. Dieser Abtrieb 18 kann beispielsweise durch eine Getriebeeingangswelle 19 gebildet sein.

Das Gehäuse 5 weist eine sich von der antriebsseitigen Gehäusenabe 15 aus im Wesentlichen nach radial außen erstreckende antriebsseitige Gehäusewandung 20 und eine sich von der abtriebsseitigen Gehäusenabe 16 aus im Wesentlichen nach radial außen erstreckende abtriebsseitige Gehäusewandung 21 auf. Diese beiden Gehäusewandungen 20, 21 gehen jeweils im radial äußeren Bereich in Gehäuseaußenschalen 23, 24 über, durch welche die beiden Gehäusewandungen 20, 21 axial miteinander verbunden sind und die in nicht gezeigter Weise druckdicht aneinander befestigt sind, um einen Verlust an Fluid aus einem von den Gehäusewandungen 20, 21 und den Gehäuseaußenschalen 23, 24 umschlossenen Kühlraum 28 zu verhindern.

Im Kühlraum 28 des Gehäuses 5 ist eine Mehrzahl von ersten Kupplungselementen 22, welche mit dem Gehäuse 5 und hierbei insbesondere mit dessen als antriebsseitiger Kupplungselemententräger 30 wirksamen Gehäuseaußenschale 23 zur gemeinsamen Drehung gekoppelt sind, sowie eine Mehrzahl von zweiten Kupplungselementen 24, welche an einem abtriebsseitigen Kupplungselemententräger 32 drehfest aufgenommen sind, zur Bildung einer Reibungskupplung 98 enthalten. Der abtriebsseitige Kupplungselemententräger 32 stützt sich radial über ein erstes Deckblech 34 eines Torsionsschwingungsdämpfers 38 an einer Kupplungsnabe 40 des Torsionsschwingungsdämpfers 38 ab, wobei das erste Deckblech 34 gemeinsam mit einem zweiten Deckblech 35 einen Eingangsteil 36 des Torsionsschwingungsdämpfers 38 bildet. Der Eingangsteil 36 ist gegen die Wirkung von Energiespeichern 39 gegenüber einem Ausgangsteil 42 in Form einer Nabenscheibe 44 relativ drehbar, wobei die Nabenscheibe 44 drehfest an der Kupplungsnabe 40 befestigt ist. Die Kupplungsnabe 40 ihrerseits ist sowohl an der abtriebsseitigen Gehäusenabe 16 als auch auf einer radial zwischen dieser Gehäusenabe 16 und dem Abtrieb 18 angeordneten Stützwelle 47 zentriert und mit dem Abtrieb 18 zur gemeinsamen Drehung gekoppelt. Die Stützwelle 47 begrenzt mit der abtriebsseitigen Gehäusenabe 16 einen ersten ringförmigen Kanal 49, mit dem Abtrieb 18 dagegen einen zweiten ringförmigen Kanal 50.

Die Kupplungsnabe 40 ist durch eine erste Axiallagerung 45 gegenüber der antriebsseitigen Gehäusenabe 15 und durch eine zweite Axiallagerung 46 gegenüber der abtriebsseitigen Gehäusenabe 16 innerhalb des Gehäuses 5 positioniert.

Die antriebsseitige Gehäusenabe 15 nimmt, axial zwischen der antriebsseitigen Gehäusewandung 20 und der Kupplungsnabe 40, ein Anpressmittel 80 auf, wobei dieses Anpressmittel 80 als Kolben 82 ausgebildet und über eine Momenten-Aufbauanordnung 56 in Form eines Axialkraftspeichers 57 mit dem benachbarten Kupplungselement 22 in Wirkverbindung bringbar ist. Die Momenten-Aufbauanordnung 56 stützt sich einerseits an einer umlaufenden Sicke 58 des Anpreßmittels 80 und andererseits an der ihm zugewandten Seite des benachbarten Kupplungselementes 22 ab.

Das Anpreßmittel 80 ist ebenso wie jedes der Kupplungselemente 22, 24 als Kupplungsorgan 84 der Reibungskupplung 98 wirksam. An dem Anpreßmittel 80 kommt, radial innerhalb der Kupplungselemente 22, 24, eine Ausrück-Unterstützungsanordnung 52 in Form eines Axialkraftspeichers 54 zur Anlage, die sich andererseits an einer Stützfläche 64 eines an der antriebsseitigen Gehäusenabe 15 fest vorgesehenen Bauteils 66 in Form eines Radialvorsprunges abstützt. Durch die Ausrück-Unterstützungsanordnung 52 wird das Anpreßmittel 80 in Richtung zur antriebsseitigen Gehäusewandung 20 beaufschlagt.

Das Anpressmittel 80 ist axial zwischen der antriebsseitigen Gehäusewandung 20 und dem Kühlraum 28 angeordnet und begrenzt gemeinsam mit der antriebsseitigen Gehäusewandung 20 einen Druckraum 86, der über Strömungsdurchlässe 90 in der antriebsseitigen Gehäusenabe 15 sowie über Strömungsdurchlässe 92 im Abtrieb 18, also in der Getriebeeingangswelle 19, mit einer als Steuerleitung 94 dienenden Mittenbohrung der Getriebeeingangswelle 19 verbunden ist. Weiterhin sind Strömungsdurchgänge 96 in der Kupplungsnabe 40 vorgesehen, durch welche eine Strömungsverbindung zwischen dem Kanal 50 und dem Kühlraum 28 herstellbar ist. Der letztgenannte ist gegenüber dem Druckraum 86 abgedichtet, ebenso wie die Getriebeeingangswelle 19 gegenüber der antriebsseitigen Gehäusenabe 15 und die Kupplungsnabe 40 gegenüber dem ersten Deckblech 34 des Torsionsschwingungsdämpfers 38 sowie gegenüber der Stützwelle 47. Durch die Abdichtungen soll vermieden werden, dass von einer vom Kanal 50 über die Strömungsdurchgänge 96 in den Kühlraum 28 geleiteten Strömung erhebliche Strömungsanteile entweder über den Torsionsschwingungsdämpfer 38 in den Kanal 49 oder direkt vom Kanal 50 in den Kanal 49 gelangen kann, ohne zuvor die Kupplungselemente 22 und 24 zur Kühlung erreicht zu haben. Im Gegensatz dazu wird durch die Abdichtungen zwischen Getriebeeingangswelle 19 und antriebsseitiger Gehäusenabe 15 vermieden, dass Fluid, das zur Druckbeaufschlagung des Druckraumes 86 vorgesehen ist und diesem über die Steuerleitung 94 in der Getriebeeingangswelle 19 sowie über die Strömungsdurchlässe 90, 92 zugeleitet wird, in den Kühlraum 28 absickem kann.

Gemäß Fig. 1 befindet sich das Anpressmittel 80 in seiner Ausrückposition, in welcher die Kupplungselemente 22, 24 entlastet und daher nicht zur Übertragung eines vom Antrieb 11 stammenden und auf das Gehäuse 5 geleiteten Drehmomentes auf den Abtrieb 18 befähigt sind. Durch Aufbau eines Überdruckes im Druckraum 86 gegenüber dem Kühlraum 28 wird das Anpressmittel 80 gegen die Wirkung des Axialkraftspeichers 54 der Ausrück-Unterstützungsanordnung 52 und unter Verformung des Axialkraftspeichers 58 der Momenten-Aufbauanordnung 56, in Richtung zu den Kupplungselementen 22, 24 axial verlagert. Zuerst wird bei dieser Verlagerungsbewegung des Anpreßmittels 80 der Berührabschnitt erreicht, in welchem die Momenten-Aufbauanordnung 56 zwar mit einer geringen Anpreßkraft auf das benachbarte Kupplungselement 22 einwirkt, diese Anpreßkraft aber nicht genügt, um die Kupplungselemente 22, 24 in eine für eine Drehmomentübertragung ausreichende Wirkverbindung miteinander zu bringen. Bei weiterem Druckaufbau im Druckraum 86 wird ein zunehmend stärkeres Anpressen des Druckmittels 80 gegen das benachbarte Kupplungselement 22 und, über dieses, gegen die übrigen Kupplungselemente 22, 24 ausgelöst, so dass die letztgenannten immer stärker gegeneinander gepreßt werden, da eine Ausweichbewegung dieser Kupplungselemente in Richtung zur abtriebsseitigen Gehäusewandung 21 durch das derselben am nächsten kommende letzte Kupplungselement 22, das ortsfest an der Gehäuseaußenschale 25 aufgenommen ist, unterbunden wird. Bei fortgesetzter Zunahme der vom Anpressmittel 80 auf die Kupplungselemente 22, 24 ausgeübten Anpreßkraft beginnt die Drehmomentübertragung, während dann, wenn das Anpressmittel 80 seine Einrückposition erreicht hat und seine Verlagerungsbewegung beendet ist, die Kupplungselemente 22, 24 mit einer Axialkraft gegeneinander gepreßt werden, in welcher die maximale Drehmomentübertragung möglich ist. Es bleibt hinzuzufügen, dass ab einer vorbestimmten Position des Anpreßmittels 80, vorzugsweise in einem Axialbereich zwischen dem Berührabschnitt und der Einrückposition, der Axialkraftspeicher 57 der Momenten-Aufbauanordnung 56 seine maximale Anpreßkraft erreicht hat, woraufhin das Anpreßmittel 80, durch das eine ungleich höhere Anpreßkraft aufzubringen ist, ohne Unterstützung durch die Momenten-Aufbauanordnung 56 wirksam ist.

Bedingt durch die Momenten-Aufbauanordnung 56 kann, aufgrund der mit deren Axialkraftspeicher 57 eingebrachten Elastizität, das gegenüber der Momenten-Aufbauanordnung 56 wesentlich unelastischere Anpreßmittel 80 mit den ebenfalls vergleichsweise unelastischen Reibflächen der Kupplungselemente 22, 24 relativ weich und gleichförmig in Wirkverbindung gebracht werden. Außerdem werden durch die Momenten-Aufbauanordnung 56 radiale und/oder axiale Toleranzen zwischen den Kupplungselementen 22, 24 ebenso wie eine eventuelle Welligkeit an deren Reibflächen in Umfangsrichtung ausgeglichen und dadurch der Nutzungsgrad dieser Reibflächen für die Momentenübertragung bei gleichzeitig reduzierten Flächenpressungen erhöht.

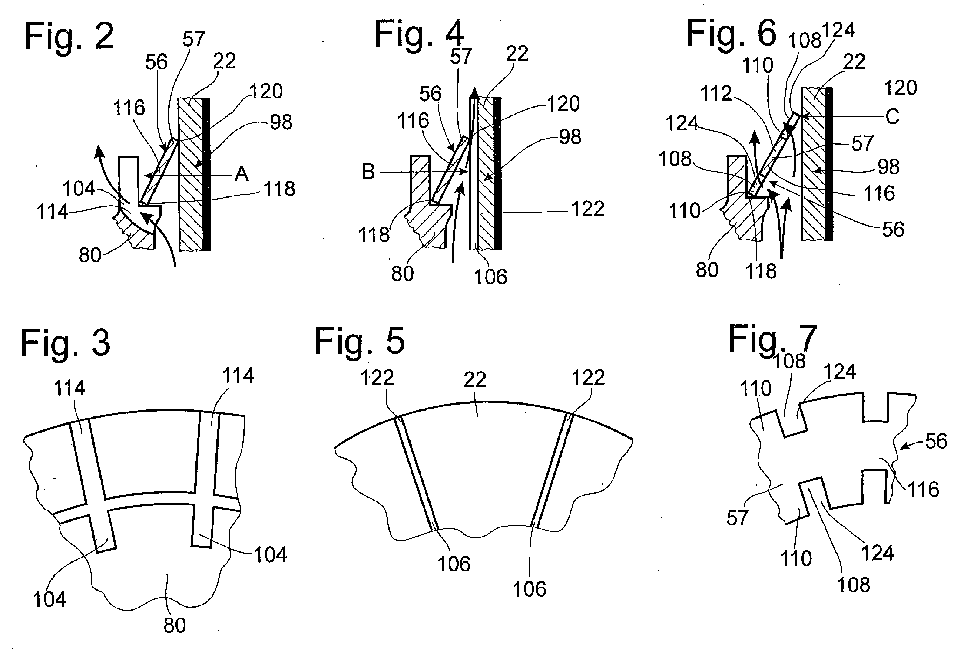

Der Axialkraftspeicher 57 der Momenten-Aufbauanordnung 56 ist als Tellerfeder 116 ausgebildet, die gemäß Darstellung in Fig. 2 einerseits an einem Abstützbereich 118 des als erstes Stützelement 100 dienenden Anpressmittels 80 und andererseits an einem Abstützbereich 120 des als zweites Stützelement 102 dienenden benachbarten Kupplungselementes 22 zur Anlage kommt. Unmittelbar angrenzend an den ersten Abstützbereich 118 sind im Anpressmittel 80 Nutungen 114 ausgebildet, die, wie Fig. 3 zeigt, in vorbestimmten Umfangsabständen zueinander vorgesehen sind, und zusammen als Strömungsdurchlass 104 dienen. Infolge der Relativdrehbewegung der mit dem Antrieb 11 drehfesten Kupplungselemente 22 gegenüber den mit dem Abtrieb 18 drehfesten Kupplungselementen 24 wird mit dem im Gehäuse 5 der Kopplungsvorrichtung 3 vorhandenen Fluid eine Strömung erzeugt, die in Fig. 2 durch Pfeile symbolisch dargestellt ist, und die Nutungen 114 des Anpressmittels 80 durchströmt. Dadurch wird eine Kühlung des Anpressmittels 80 bewirkt.

Während somit nach Fig. 2 der Strömungsdurchlass 104 dem ersten Abstützbereich 118 der Momenten-Aufbauanordnung 56 zugeordnet ist, wirkt gemäß Fig. 4 ein Strömungsdurchlass 106 mit dem zweiten Abstützbereich 120 zusammen. Der Strömungsdurchlass 106 wird durch Nutungen 122 gebildet, die entsprechend Fig. 5 mit vorbestimmtem Umfangsversatz zueinander ausgebildet sind, und zwar gemäß Fig. 4 in der der Momenten-Aufbauanordnung 56 zugewandten Seite des Kupplungselementes 22. Auch hier ist die Strömung des Fluids im Kühlraum 28 symbolisch durch Pfeile dargestellt, und lässt erkennen, dass auf diese Weise das Kupplungselement 22 der Reibungskupplung 98 einer Kühlungwirkung unterworfen wird.

Selbstverständlich können die in den Fig. 2 bis 5 gezeigten Ausführungen derart miteinander kombiniert werden, dass gleichzeitig die Abstützbereiche 118, 120 beider Stützelemente 100, 102 kühlbar sind. Dies ist, wie aus den die Strömung des Fluids im Kühlraum 28 symbolisch darstellenden Pfeilen ersichtlich ist, auch bei der Ausführung nach den Fig. 6 und 7 möglich, bei welcher die Momenten-Aufbauanordnung 56 als Axialkraftspeicher 57 über eine Tellerfeder 116 verfügt, die einen mittigen Grundkörper 112 und, sich an deren Radialseiten außen und innen, jeweils anschließende Zungen 110 aufweist, wobei die letztgenannten in vorbestimmten Umfangsabständen zueinander angeordnet sind und umfangsseitig zwischen je zwei Zungen 110 über je eine Ausnehmung 124 (Fig. 7) verfügen, die in ihrer Summe als Strömungsdurchlass 108 dienen.

Selbstverständlich können bei der Tellerfeder 116 gemäß den Fig. 6 oder 7, alternativ zur beschriebenen Ausführung, am Grundkörper 112 auch lediglich an einer Radialseite - außen oder innen - Zungen 110 zur Bildung der Ausnehmungen 124 und damit eines Strömungsdurchlasses 108 angeformt sein. Entsprechend der Auswahl der vorgenannten Radialseite kann demnach auch lediglich das Anpreßmittel 80 oder das demselben benachbarte Kupplungselement 22 gekühlt sein.

### Bezugszeichenliste

- 1: Antriebsstrang
- 3: Kopplungsvorrichtung
- 5: Gehäuse
- 7: Befestigungselemente
- 9: Kopplungselement
- 10: Lagerzapfen
- 11: Antrieb
- 12: Zentrierführung
- 13: Kurbelwelle
- 14: Drehachse
- 15, 16: Gehäusenabe
- 18: Abtrieb
- 19: Getriebeeingangswelle
- 20,21: Gehäusewandungen
- 22: erste Kupplungselemente
- 23,25: Gehäuseschalen
- 24: zweite Kupplungselemente
- 28: Kühlraum
- 30: antriebsseitiger Kupplungselemententräger
- 32: abtriebsseitiger Kupplungselemententräger
- 34: erstes Deckblech
- 36: Eingangsteil
- 38: Torsionsschwingungsdämpfer
- 39: Energiespeicher
- 40: Kupplungsnabe
- 42: Ausgangsteil
- 44: Nabenscheibe
- 45, 46: Axiallagerung
- 47: Stützwelle
- 49,50: Kanal
- 52: Ausrücker-Unterstützungsanordnung
- 54: Axialkraftspeicher
- 56: Momenten-Aufbauanordnung
- 57: Axialkraftspeicher
- 58: Sicke
- 64: Stützfläche
- 66: Bauteil
- 80: Anpressmittel
- 82: Kolben
- 84: Kupplungsorgan
- 86: Druckraum
- 90,92: Strömungsdurchlässe
- 94: Steuerleitung
- 96: Strömungsdurchgänge
- 98: Reibungskupplung
- 100, 102: Stützelemente
- 104, 106, 108: Strömungsdurchlässe
- 110: Zungen
- 112: Grundkörper
- 114: Nutung
- 116: Tellerfeder
- 118, 120: Abstützbereiche
- 122: Nutung
- 124: Ausnehmung

## Patentansprüche

1. Kopplungsvorrichtung, aufweisend ein mit einem Antrieb verbundenes Gehäuse, einen Abtrieb, der gegenüber dem Gehäuse in Umfangsrichtung relativ drehbar angeordnet ist, und zumindest eine in dem Gehäuse aufgenommene, zwischen einer Einrückposition und einer Ausrückposition schaltbare Reibungskupplung, die als Kupplungsorgane wenigstens ein Anpressmittel und mindestens ein durch das Anpressmittel beaufschlagbares Kupplungselement aufweist, das ebenso wie das Anpressmittel in Achsrichtung begrenzt verlagerbar ist und wenigstens über eine Reibfläche und eine mit dem Abtrieb in Wirkverbindung stehende Kupplungsnabe verfügt, wobei beginnend in einem zwischen Einrückposition und Ausrückposition liegenden Berührabschnitt bis zum Erreichen der Einrückposition ein Drehmoment des Antriebs über das Gehäuse und die Reibungskupplung auf den Abtrieb übertragbar ist, während jenseits des Berührabschnittes bis zur Ausrückposition diese Drehmomentübertragung aufgehoben ist,
**dadurch gekennzeichnet,**
**dass** dem Anpressmittel (80) eine dasselbe in vom Kupplungselement (22) der Reibungskupplung (98) fortweisender Richtung beaufschlagende Momenten-Aufbauanordnung (56) zugeordnet ist, welche einerseits in dem Anpressmittel ein erstes Stützelement (100) und andererseits im Kupplungselement (22) ein zweites Stützelement (102) vorfindet, wobei an zumindest einem dieser Stützelemente (100, 102) und/oder an der Momenten-Aufbauanordnung (56) wenigstens ein Strömungsdurchlass (104, 106, 108) für Fluid vorgesehen ist, das in einem die Reibungskupplung (98) aufnehmenden Kühlraum (28) innerhalb des Gehäuses (5) enthalten ist.

2. Kopplungsvorrichtung nach Anspruch 1,
**dadurch gekennzeichnet,**
**dass** das Anpresselement (80) angrenzend an einen Abstützbereich (118) für die Momenten-Aufbauanordnung (56) zumindest eine als Strömungsdurchlass (104) dienend Nutung (114) aufweist.

3. Kopplungsvorrichtung nach Anspruch 1 oder 2,
**dadurch gekennzeichnet,**
**dass** das Kuppplungselement (22) angrenzend an einen Abstützbereich (120) für die Momenten-Aufbauanordnung (56) zumindest eine als Strömungsdurchlass (106) dienende Nutung (122) aufweist.

4. Kopplungsvorrichtung nach Anspruch 1, 2 oder 3
**dadurch gekennzeichnet,**
**dass** die Momenten-Aufbauanordnung (56) an ihrer dem Anpresselement (80) zugewandten Seite und/oder an ihrer dem Kupplungselement (22) zugewandten Seite zumindest eine als Strömungsdurchlass (108) dienende Ausnehmung (124) zwischen je zwei Zungen (110) der Momenten-Aufbauanordnung (56) aufweist.

5. Kopplungsvorrichtung nach einem der Ansprüche 1 bis 4,
**dadurch gekennzeichnet,**
**dass** die Momenten-Aufbauanordnung (56) einen Axialkraftspeicher (57) aufweist.

6. Kopplungsvorrichtung nach Anspruch 5,
**dadurch gekennzeichnet,**
**dass** der Axialkraftspeicher (57) als Tellerfeder (116) mit einem im wesentlichen ringförmigen Grundkörper (112) ausgebildet ist.

7. Kopplungsvorrichtung nach wenigstens einem der Ansprüche 4 bis 6,
**dadurch gekennzeichnet,**
**dass** angrenzend an zumindest eine Radialseite des Grundkörpers (112) der Tellerfeder (58) zumindest zwei Zungen (110) mit umfangsseitigem Versatz zueinander vorgesehen sind, die in Umfangsrichtung je eine Ausnehmung (124) zwischen sich begrenzen.
